# EUROPEAN PATENT APPLICATION

(11) **EP 1 324 182 A2**
(43) Date of publication of application: **02.07.2003**
(21) Application number: 02258774.5
(22) Date of filing: 19.12.2002
(51) Int. Cl.: G06F 3/06

(54) **System and method for peripheral device virtual functionality overlay**

(30) Priority: 28.12.2001 US 32923
(71) Applicant: Hewlett-Packard Company, Palo Alto, CA 94304 (US)
(72) Inventor: Camble, Peter Thomas, Bishopston, Bristol BS7 9HT (GB); Gold, Stephen, Winterbourne Down, Bristol BS36 1DJ (GB); Feather, Stan S., Longmont, CO 80501 (US)
(74) Representative: Tollett, Ian

(57) **Abstract**

A method (300) for providing a peripheral device virtual functionality overlay for a data library (200) comprises intercepting commands (302) to a library data transfer element (201-204) within a bridge (210,211) disposed between a command initiator and the library, passing through commands (307) that can be carried out by the data transfer element to the data transfer element, and executing, with the bridge, commands (308) addressed to the data transfer element that cannot be carried out by the data transfer element.

## Description

The present invention relates to a method and system for providing a peripheral device virtual functionality overlay for a data library.

The present invention is related to the following copending and commonly assigned United States patent applications: serial number 10/034,691 entitled System and Method for Partitioning a Storage Area Network Associated Data Library, filed December 28, 2001; serial number 10/033,009 entitled System and Method for Partitioning a Storage Area Network Associated Data Library Employing Element Addresses, filed December 28, 2001; serial number 10/032,662 entitled System and Method for Managing Access To Multiple Devices in a Partitioned Data Library, filed December 28, 2001; serial number 10/034,518 entitled System and Method for Securing Drive Access to Media Based On Medium Identification Numbers, filed December 28, 2001; serial number 10/034,888 entitled System and Method for Securing Drive Access to Data Storage Media Based On Medium Identifiers, filed December 28, 2001; serial number 10/033,010 entitled System and Method for Securing Fiber Channel Drive Access in a Partitioned Data Library, filed December 28, 2001; serial number 10/033,003 entitled Method for Using Partitioning to Provide Capacity on Demand in Data Libraries, filed December 28, 2001; serial number 10/034,580 entitled System and Method for Intermediating Communication with a Moveable Media Library Utilizing a Plurality of Partitions, filed December 28, 2001; and serial number 10/034,083, entitled System and Method for Managing a Moveable Media Library with Library Partitions, filed December 28, 2001; the disclosures of which are hereby incorporated herein by reference.

The present invention generally relates to data storage, and specifically to a system and method for providing a peripheral device virtual functionality overlay.

In certain storage area networks (SANs), a small computer systems interface (SCSI)-based data library or the like is made part of the SAN. A SAN may be fiber channel (FC)-based and may employ data mover functionality or similar direct read/write technology. Generally data mover functionality employed by FC-based devices is not available in SCSI-based storage devices, such as SCSI-based tape drives of the aforementioned SCSI data library. If a data mover is required to function based on a SCSI-extended third party copy command associated with each tape drive in a library this cannot be implemented on an existing parallel SCSI connected tape drive, as the tape drives cannot directly communicate with a data mover or a storage device such as a FC disk array from which data is being moved.

In existing FC-to-SCSI bridges connecting a SCSI-based data library to a FC-based SAN, data mover logical unit numbers (LUNs) may be created by the bridge firmware to act as virtual data mover devices. However, this generally means that a separate data mover LUN has to be defined for each tape drive attached to the bridge, particularly when the FC-to-SCSI bridge includes tape library partitioning and security functions. A system and method for partitioning a data library is disclosed in the aforementioned U.S. Patent Application Serial No. [30014512-1] entitled "System and Method for Managing Access To Multiple Devices in a Partitioned Data Library".

Further problems arise in certain SAN usage scenarios. For storage service providers (SSPs), or the like, there are often multiple customers attempting to share the same common SAN resources. There is a need to ensure that a customer can only access the storage resources allocated to that customer. Others should be prevented from accessing a customer's storage. For example, if a customer stores their critical business data with a SSP, then they generally do not want other customers of the SSP reading their data or even being aware that they have information stored with the SSP. Thus, there is a need to secure the device resources of a SAN attached data library so that only specified servers connected to the SAN can access or be aware of those resources.
FC switches have the capability of configuring security zones that define which world wide names (WWNs) or FC ports of servers can see which WWNs or FC ports of devices. However, FC switch security zones do not extend to FC addresses or FC device LUNs. Therefore, it is currently only possible to secure at the FC port level using FC switches and switch zoning. Even were it possible to secure at the FC port level, in the case of SCSI tape libraries that are attached behind FC bridges, it would be very difficult for a user to define security zones particularly based on tape library partitions. To implement security using FC switch zoning, the user would have to map the data mover LUNs into the correct library partitions. It would be difficult for a user to correctly identify which FC ports and LUNs are associated together in the same security zone for a switch, and the user could easily make mistakes in such a manual process.
A method for providing a peripheral device virtual functionality overlay for a data library comprises intercepting commands to a library data transfer element within a bridge disposed between a command initiator and the library, passing through commands that can be carried out by the data transfer element to the data transfer element, and executing, with the bridge, commands addressed to the data transfer element that cannot be carried out by the data transfer element.
A number of preferred embodiments of the present invention will now be described with reference to the drawings in which:-
FIGURE 1 is a diagrammatic illustration of a SAN employing an embodiment of the present system and method for overlaying peripheral device virtual functionality;
FIGURE 2 is a diagrammatic illustration of an example of a data library employing an embodiment of the present system and method; and
FIGURE 3 is a flow chart of a method of operation of an embodiment of the present overlay.

The present invention is directed to systems and methods that employ FC-to-SCSI bridges or similar devices to implement additional virtual functionality for peripherals attached to the bridge. Such functionality could, for example, include direct peripheral-to-peripheral data movement commands, such as a tape drive sourcing data from a disk drive directly without involvement of a host computer, or such as a disk drive transferring data directly onto a tape drive. With the present invention, functionality, such as zero down-time backups (ZDBs) via data mover interconnectivity, may be advantageously employed by a SAN using peripheral devices heretofore unable to implement such functionality in a direct manner. Other functionality that embodiments of the present system and method may enable includes, but is not limited to, error recovery, caching, error logging, diagnostic logging, error management, diagnostic management, data compression, data encryption and provision of drive or media statistics.

Additional or alternative functionality provided according to the present invention may include management and environmental monitoring commands. Preferably, as far as a host or other command initiator is concerned, such data mover, management or monitoring functionality is implemented by the peripheral(s). In other words, the intermediary bridge is preferably transparently overlaying the aforementioned functionality over the peripheral command set(s).

The present system and method enables the foregoing extra functionality to be retrofitted to existing devices, particularly SCSI-based data tape libraries. For example, tape drive-based data mover functionality such as ZDBs may be implemented in a FC-to-SCSI bridge that connects the tape drive to a FC attached SAN.

If there are data movers in the FC-to-SCSI bridge, it is generally desirable to secure the device resources on the bridge so that only specific authorized servers connected to the SAN can access the data movers. Therefore, device-level security features in the bridges are preferably integrated with the present virtual overlay commands.

If existing SCSI devices, such as data tape libraries, are connected to a Fibre Channel SAN via a FC-to-SCSI bridge, then the tape library can be partitioned with a subset of the tape drives, slots and a virtual medium changer device per partition. Such a partitioning method and system are disclosed in U.S. Patent application serial number [30014510-1] entitled "System and Method for Partitioning a Storage Area Network Associated Data Library". Each partition can be secured with a list of authorized unique host device identifiers such as FC world wide names (WWNs). Every host and device connection into a FC SAN has a unique WWN, which can be used to uniquely identify a device or host connection. However, as noted above, FC-to-SCSI bridges in the tape library, including the present data mover functionality, may be secured to prevent unauthorized servers accessing data from the tape library via the data movers.

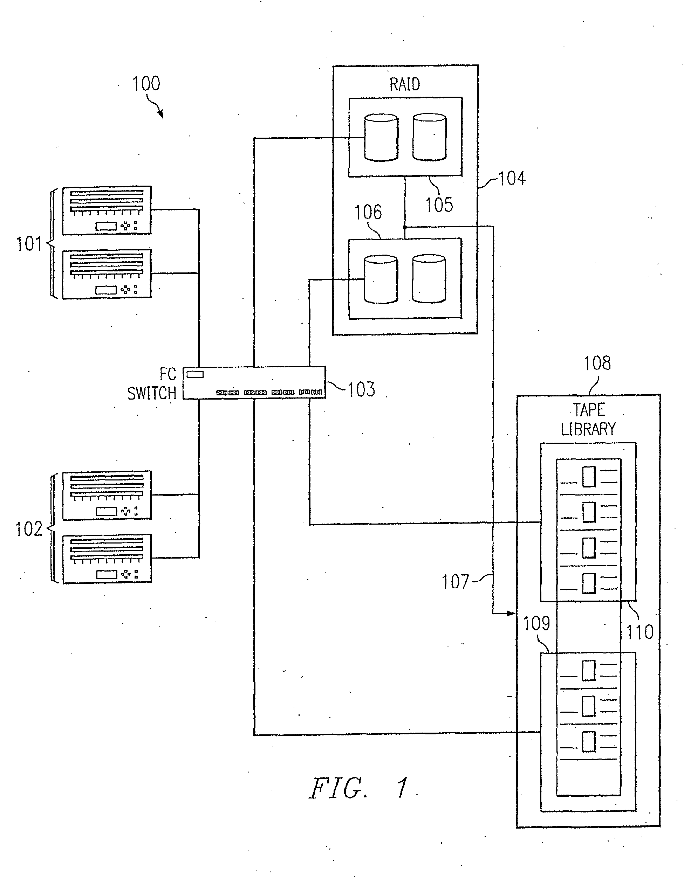

Turning to FIGURE 1, SAN 100 is shown. By way of example, first and second customer servers 101 and 102 are connected to SAN 100 via FC switch 103. redundant array of independent disks (RAID) 104 may be partitioned assigning first partition 105 to server 101 and second partition 106 to server 102 using existing FC LUN-based RAID partitioning methods. ZDBs may be performed in accordance with the present invention of the data each server has on the RAID-to-tape library 108, via ZDB interconnectivity 107 between RAID 104 and tape library 108. Such ZDBs are preferably carried out without impinging on the processor operations or LAN capacity of servers 101 and 102. Data tape library 108 is preferably partitioned into multiple virtual library partitions. Each library partition preferably has one or more physical tape drives, a unique subset of the library media slots, and a virtual dedicated library changer device LUN assigned to the partition, such partitioning system and method is disclosed in aforementioned copending application serial number [30014511-1] entitled "System and Method for Partitioning a Storage Area Network Associated Data Library Employing Element Addresses" and copending application serial number [30014510-1] entitled "System and Method for Partitioning a Storage Area Network Associated Data Library". These systems and methods may be used to ensure that backup or archive data for server 101 is maintained in partition 109 separate from data for server 102, and that the backup or archive data of server 102 is maintained in partition 110 separate from data for server 101. Such partitioning ensures that the servers may not access each other's data even though it is maintained in the same physical library.

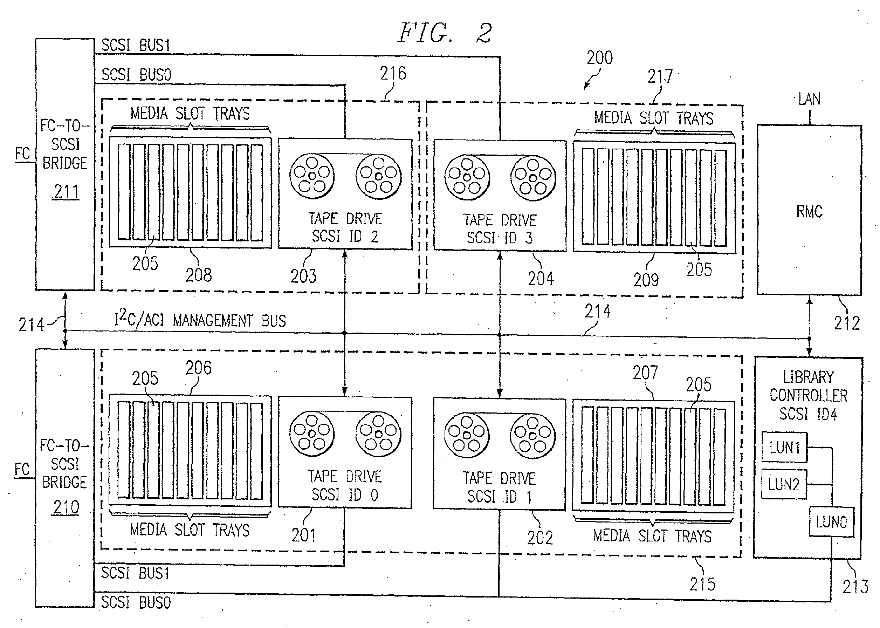

Data tape library 200 employing a preferred embodiment of the present system and method is illustrated in FIGURE 2 as an example of a library that may be employed as library 108 of FIGURE 1. However, other library designs and/or capacities may embody the present system and method. Exemplar data tape library 200 has four data transfer elements in the form of tape drives 201-204, forty media storage element slots 205 that are shown organized into four trays 206-209 of ten slots each, two FC-to-SCSI bridges 210 and 211, a library management interface card or remote management card (RMC) 212 and library controller 213. Tape drives 201-204, FC-to-SCSI bridges 210 and 211, RMC 212 and library controller 213 preferably communicate with each other using an inter-integrated circuit (I²C) serial management bus 214 and/or automated control interface (ACI) 214 or the like. Typically, tape drives 201-204 are SCSI-based devices.

For partitions to employ the present system and method, library media slots 205 and tape drives 201-204 should be assigned to each partition, and a virtual library controller may be addressable with respect to each partition. The slots may be assigned by trays or individually. The example partitioning shown in FIGURE 2 is indicated by boxes 215, 216 and 217 representing three partitions of the illustrated configuration. Import/export elements or mailslots may be assigned to each partition or configured for use by the entire library. Preferably, easily accessible media storage slots may be configured as mailslots by the present invention. For the partitioning system and method to be transparent to a user server, the library robotic arm used to move media from slots to drives is preferably shared among user servers. However, it should appear to each server that it is the owner of the arm.

SCSI library controller 213 is preferably connected to one of the FC-to-SCSI bridges, such as FC-to-SCSI bridge 210. Controller 213 preferably presents a separate LUN to accessing hosts or devices for each library partition, for example LUN-0 for partition 215, LUN-1 for partition 216 and LUN-2 for partition 217. Control of FC LUN-based security for the partitions is preferably carried out via a library subsystem management interface of RMC 212, which is connected to FCto-SCSI bridges 210 and 211 via a private management network such as I²C bus 214. Users may configure security for each library partition via a library web management interface or the like, rather than separately configuring the security for each FC-to-SCSI bridge 210 and 211 attached to library 200, manually.

As shown in FIGURE 2, more than one peripheral can be placed behind a bridge, which can bridge heterogeneous buses, such as FC-to-host and SCSI-to-peripheral. A bridge may be contained either in an enclosure such as a tape/disk rack or tape library containing the peripherals as illustrated in FIGURE 2, each peripheral itself may contain a bridge, or a combination thereof may be present.

In the example implementation of the present system and method of FIGURES 1 and 2, enhanced FC-to-SCSI bridges 210 and 211 are preferably a part of tape library 108/200 and thus attached between FC SAN RAID 104 and SCSI-interfaced resources of tape library 108/200, such as tape drives 201-204, via FC switch 103. Bridges 210 and 211 preferably pass through all commands and data in the peripheral command sets as dictated by the partitions of library 108/200. Additional commands and data may also be employed by the present enhanced bridges, such as data mover SCSI commands. These commands, although addressed to the peripherals 201-204 of library 200, will preferably be intercepted by bridge 210 and 211 and not passed on to the peripherals. Each bridge will instead preferably implement functionality required by these additional command sets and respond back to the command initiator, whether it be servers 101 or 102 or a SAN component such as RAID 104, as though the bridge is the peripheral, thus providing the aforementioned transparency. Therefore, it appears to the host or other initiator that each peripheral has greater functionality than it actually has.

Since the exemplar data mover functionality is implemented in the bridge as a virtual overlay to all of the SCSI devices behind the bridge, any security applied to those devices will also preferably apply to the virtual overlay commands as well. A library may be partitioned and secured as discussed above. A security look-up table preferably held in nonvolatile m emory in bridges 210 and 211 is indexed by authorized WWNs for accessible SCSI Bus/ID/LUN objects to provide operating system (OS)-friendly mapping. Each row of the security look-up tables may represent the SCSI Bus/ID/LUN objects of active partitions that are available to a specified initiator WWN along with the partition number of each SCSI Bus/ID/LUN object. For example, partition 215 may be secured and may only be seen by the host that has WWN_1; partition 216 may be secured and can only be seen by the host that has WWN_2; and partition 217 may be unsecured and can be seen by all hosts on a connected SAN. Such a "System and Method for Managing Access To Multiple Devices in a Partitioned Data Library" is disclosed in U.S. Patent Application Serial Number [30014512-1]. In such a partition, when a SCSI data mover command is sent to a secured library drive behind the bridge, the bridge preferably uses the same security look-up table disclosed in the immediately aforementioned application. Accordingly, the command initiator's WWN or the like is preferably used to determine whether the virtual overlay command should be processed or rejected. Also, if the bridge security feature implements OS-friendly mapping, the security look-up table should be used to determine which device is being addressed by the data mover SCSI command.

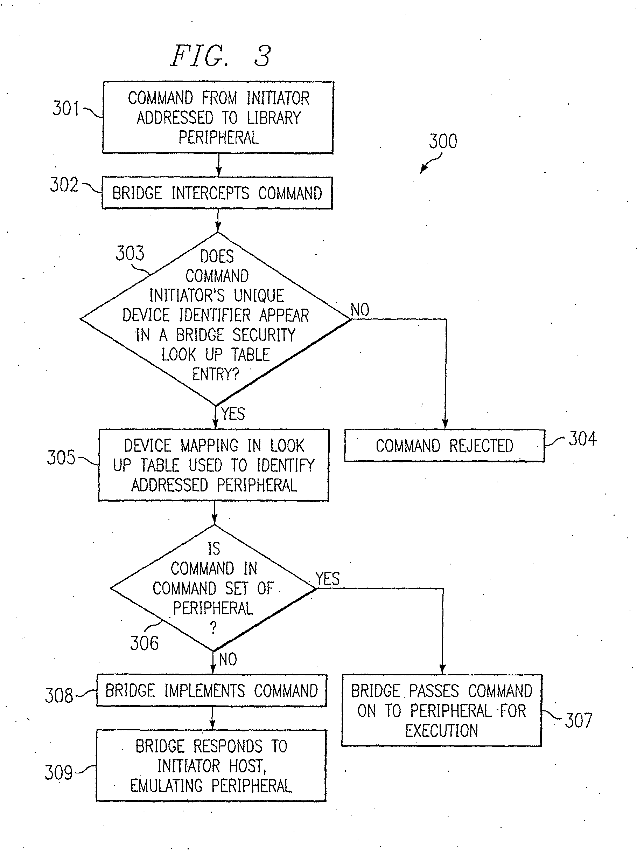

Turning to the flowchart of FIGURE 3, preferred process 300 carried out in a FC-to-SCSI bridge disposed between SAN 100 and library 108/200 to implement an embodiment of the present overlay method is illustrated. A command may be issued from an initiator (e.g., RAID 104 or a SAN-connected host such as servers 101 or 102) at box 301, and is preferably intercepted by the bridge disposed between the SAN and the command's target library peripheral at box 302. A determination is made at 303 as to whether the command initiator's WWN or other unique host device identifier has an entry row in the bridge's security look-up table. If no entry exists in the look-up table, the command is preferably rejected at box 304 as unauthorized, unless the command is directed to an unsecured peripheral. If an entry for the initiator's WWN is found, the device-mapping in the entry row of the look-up table associated with that entry may be used to determine the library peripheral to which the command is addressed at box 305. If it is determined at 306 that the command is included in the command set the target peripheral can execute, the bridge passes the command through to the peripheral at box 307. If at 306 it is determined that the command is outside the command set the target drive is enabled to carry out, the bridge may intercept and implement the command. Also, the bridge may intercept commands the target peripheral is capable of carrying out, or carrying out in part, for the purpose to implementing the command in a different fashion. The bridge transparently implements intercepted commands at box 308 such that the initiator perceives the target peripheral as the device carrying out the command. To implement a command the bridge may issue commands within the peripheral's command set to the peripheral. Additionally, commands or requests may be issued by the bridge, while emulating a peripheral capable of carrying out the desired command, to SAN resources such as a RAID or FC switch or to servers connected to the SAN. At box 309, the bridge reports back to the initiator, as if it were the peripheral to which the command was addressed, as a peripheral capable of carrying out the command would respond, thereby emulating an addressed peripheral with greater functionality than the actual library peripheral.

As will be appreciated by one skilled in the art, the present invention may be used for other types of storage bridges, for example iSCSI-to-SCSI bridges In such a system and method, the iSCSI equivalent of FC-WWNs, such as iSCSI names, are preferably used to authenticate initiators onto secured partition LUNs.

## Claims

1. A method (300) for providing a peripheral device virtual functionality overlay for a data library (200), said method comprising:
intercepting commands (302) to a library data transfer element (201-204) within a bridge (210,211) disposed between a command initiator and said library;
passing through commands (307) that can be carried out by said data transfer element to said data transfer element; and
executing, with said bridge, commands (308) addressed to said data transfer element that cannot be carried out by said data transfer element.

2. A method as claimed in claim 1 wherein said data library is partitioned.

3. A method as claimed in claims 1 or 2 further comprising:
responding to said initiator (309) as a data transfer element capable of carrying out said command.

4. A method as claimed in any preceding claim further comprising:
comparing a command initiator's unique host device identifier to a list of unique host device identifiers authorized to issue commands to said data transfer element.

5. A method as claimed in claim 4 further comprising:
maintaining said list of unique host device identifiers in said bridge.

6. A method as claimed in any preceding claim further comprising:
determining which data transfer element in said library said command is directed to by using a look up table maintained on said bridge.

7. A peripheral device virtual functionality overlay system for a partitioned data library (200), said overlay system comprising:
a lookup table that indicates unique host device identifiers authorized to access each of said data transfer elements of said library; and
a bridge (210,211) disposed between a storage area network (100) and said partitioned data library, wherein said bridge comprises firmware that uses said lookup table to determine whether a host initiating commands directed to a data transfer element (201-204) of said library is authorized to issue commands to said data transfer element, wherein said bridge firmware passes through to said data transfer element authorized commands that can be carried out by said data transfer element and wherein said bridge firmware intercepts and executes commands directed to said data transfer element that cannot be carried out by said data transfer element.

8. A system as claimed in claim 7 wherein said bridge responds to a host initiating a command that cannot be carried out by said data transfer element as a data transfer element capable of carrying out last said command.

9. A system as claimed in claims 7 or 8 wherein an identity of said data transfer element is determined from said lookup table at least in part based on said unique hose device identifier associated with said host.

10. The system and method of claims 1, 2, 6 or 7 wherein said commands that cannot be carried out by said data transfer element include at least one command which is a data mover command, an error recovery command, a caching command, an error logging, diagnostic logging, error management, diagnostic management or data compression command, a data encryption command or provision of statistics.
